# EUROPÄISCHE PATENTANMELDUNG

(11) **EP 0 965 384 A1**
(43) Veröffentlichungstag der Anmeldung: **22.12.1999**
(21) Anmeldenummer: 99111281.4
(22) Anmeldetag: 10.06.1999
(51) Int. Cl.: B01J 37/02

(54) **Tränkverfahren zur Aufbringung von Aktivmasse auf strukturierte Träger oder Monolithe**

(30) Priorität: 19.06.1998 DE 19827385
(71) Anmelder: BASF AKTIENGESELLSCHAFT, 67056 Ludwigshafen (DE)
(72) Erfinder: Bröcker, Franz Josef, Dr., 67061 Ludwigshafen (DE); Schwab, Ekkehard, Dr., 67434 Neustadt (DE)

(57) **Zusammenfassung**

Aktivmassen werden mittels eines Tränkverfahrens auf strukturierten Trägern abgeschieden, wobei das Tränkmedium eine Oberflächenspannung von höchstens 50 mN/m hat. Aus derart hergestellten strukturierten Trägern werden Monolithe hergestellt. Die strukturierten Träger oder die Monolithe werden in chemischen Verfahren als Katalysatoren eingesetzt.

## Beschreibung

Die vorliegende Erfindung betrifft ein Tränkverfahren zur Aufbringung von Aktivmasse auf strukturierte Träger oder Monolithe. Weiterhin betrifft sie katalytisch aktive strukturierte Träger und Monolithe, die mit diesem Verfahren hergestellt werden und Verfahren, in denen diese als Katalysator eingesetzt werden.

Unter strukturierten Trägern werden im Zusammenhang mit dieser Erfindung solche Träger verstanden, die eine regelmäßige flächige oder räumliche Struktur aufweisen und sich dadurch von Trägern in Partikelform, die als loses Haufwerk verwendet werden, unterscheiden. Beispiele für strukturierte Träger sind aus Fäden oder Drähten aufgebaute Träger, meist in Form von Trägerbahnen, wie Gewebe, Gestricke, Gewirke oder Filze, oder Bleche, die jedoch auch Aussparungen aufweisen können, wie Lochbleche oder Streckmetall. Solche im wesentlichen flächigen strukturierten Träger können zu dein Einsatzzweck entsprechend geformten räumlichen Strukturen, sogenannten Monolithen verformt werden, die ihrerseits beispielsweise als Katalysatorpackungen oder Kolonnenpackungen verwendet werden können. Packungen können aus mehreren Monolithen bestehen. Es ist ebenfalls möglich, Monolithe nicht aus flächigen Trägerbahnen aufzubauen, sondern sie ohne Zwischenstufen direkt herzustellen, beispielsweise die dem Fachmann bekannten keramischen Monolithe mit Strömungskanälen.

Auf strukturierte Träger oder Monolithe können Aktivmassen aufgebracht werden, was den strukturierten Trägern oder Monolithen katalytische Aktivität verleiht. Unter Aktivmassen sind katalytisch aktive Stoffe oder Stoffgemische zu verstehen, die mindestens einen katalytisch aktiven Bestandteil enthalten. Sie können darüber hinaus weitere katalytisch aktive Bestandteile, Hilfsstoffe und/oder Promotoren zur Beeinflussung der katalytischen Eigenschaften wie Selektivität, Aktivität und/oder Standzeit enthalten. Katalytisch aktive strukturierte Träger oder katalytisch aktive Monolithe werden beispielsweise in Verfahren eingesetzt, in denen die Verwendung eines losen Katalysatorhaufwerks etwa aus fluiddynamischen oder reaktionskinetischen Gründen unvorteilhaft ist. Typische Anwendungsgebiete sind die Abgasreinigung, vor allem in Kraftfahrzeugen, die Verwendung als Katalysatorpackung in Gas- und/oder Flüssigphasenreaktoren oder die Verwendung als Kolonnenpackung in Reaktivdestillationen.

Zur Aufbringung von Aktivmassen auf strukturierte Träger und zur Herstellung daraus aufgebauter katalytisch aktiver Monolithe oder zur Aufbringung von Aktivmassen auf Monolithe sind verschiedene Techniken bekannt.

So offenbart EP-A 198435 die Bedampfung von netz- oder gewebeartigen Trägern mit katalytisch aktiven Substanzen und Promotoren. Aus diesen bedampften Trägermaterialien werden Katalysatorpakete für die Abgasentgiftung hergestellt. EP-A 564830 lehrt die Herstellung von Katalysatorpaketen, sogenannter Monolithe, durch Temperung eines metallischen Trägermaterials an der Luft, Abkühlung, Beschichtung des Trägermaterials im Vakuum durch Bedampfen mit Aktivkomponenten und Promotoren und anschließendes Schneiden, Verformen und Verarbeiten zu Monolithen. EP-A 412415 lehrt die Bedampfung eines strukturierten Trägers mit Palladium und einem metallischen Inhibitor sowie die Verwendung der so hergestellten Katalysatoren zur Hydrierung von Dreifachbindungen zu Doppelbindungen, beispielsweise von Hydro-Dehydrolinalool zu Hydrolinaool.

Durch Bedampfung kann die Aktivmasse sehr gleichmäßig und im Normalfall ohne Bildung von größeren Agglomeraten in Form von fest haftenden feinen Partikeln auf die Trägermaterialien aufgebracht werden, dabei ist jedoch ein vergleichsweise hoher technischer und zeitlicher Aufwand erforderlich, insbesondere wenn größere Mengen an Aktivmasse aufgebracht werden sollen. Die Bedampfung muß im Vakuum durchgeführt werden, was ein diskontinuierliches Verfahren mit vergleichsweise langen Rüstzeiten oder hohe Vakuum-Pumpleistungen in kontinuierlichen Anlagen erfordert. Es hat deshalb nicht an Versuchen gefehlt, die Aktivmasse durch das von der Herstellung von Katalysatoren auf stückigen, in Partikelform vorliegenden Trägern dem Fachmann wohlbekannte Tränkverfahren herzustellen.

Häufig wird dazu auf einen vorgefertigten Monolithen ein sogenannter "washcoat" aufgebracht, ein Überzug aus einem feinteiligen oxidischen Katalysatorträgerpulver, das seinerseits mit katalytisch aktiven Substanzen beschichtet ist. Dies geschieht meist durch Tränkung des Monolithen mit einer Aufschlämmung, die das bereits mit Aktivmasse versehene oxidische Pulver oder das oxidische Pulver und Vorläufer der Aktivmasse enthält, Trocknung und gegebenfalls Umwandlung der Vorläufer in die Aktivmasse. Konventionelle Verfahren zur Aufbringung von washcoats sind beispielsweise in DE-A 4135055 und DE-A 3915685 offenbart. US-A 4,746,537 offenbart ein Verfahren zur Beschichtung eines keramischen Monolithen mit in situ aus der Gasphase abgeschiedenem gamma-Aluminiumoxid. Der so mit feinteiligem Aluminiumoxid beschichtete Monolith wird anschließend mit einer Lösung von Salzen katalytisch aktiver Metalle getränkt, getrocknet und kalziniert.

Washcoat-beschichte Monolithe zeigen jedoch häufig unbefriedigende Eigenschaften, die in der Regel darauf zurückzuführen sind, daß der Überzug sich bei Tränkung unter aktiver Durchströmung bevorzugt am bei der Tränkung zuerst durchströmten Ende der Monolithe oder beim Herausheben der Monolithe aus einem nicht strömenden Tränkbad an ihrem zuletzt aus dem Bad entfernten Ende abscheidet und zudem schlecht haftet. Daher können sich vergleichweise große Mengen katalytisch aktiven Materials ablösen und beispielsweise in einem Kraftfahrzeug durch den Auspuff ausgetragen werden oder in einer Chemieanlage sich an anderer Stelle ablagern. Derartige Ablagerungen können ein erhebliches Sicherheitsrisiko darstellen, insbesondere wenn sie an einer ungekühlten Stelle exotherme Reaktionen katalysieren.

Es wurde daher auch der Versuch unternommen, Aktivmasse oder pulverförmigen Aktivmassenträger mit einem Tränkverfahren auf strukturierte Trägermaterialien vor ihrer Verformung zu Monolithen aufzubringen.

EP-A 68862 offenbart die Herstellung von Modulen, die einerseits hydrophile gewebte, gewirkte oder gefilzte Tuche aus textilem Material, und andererseits offenmaschiges hydrophobes, und mit katalytisch aktiven Substanzen beschichtetes Material umfassen, wobei die katalytisch aktiven Substanzen - konkret Platinkristallite auf einem feinteiligen Kohlenstoffträger - als wäßrige Suspension auf das hydrophobe Material aufgebracht und durch Trocknen und Sintern bei erhöhter Temperatur fixiert werden. EP-A 56435 lehrt ein kontinuierliches Verfahren, bei dem Blechbänder durch ein Tauchbad geführt werden, in dem sie mit einem hochtemperaturbeständigen, beispielsweise keramischen Klebstoff und mit einem körnigen Trägermaterial für die katalytisch aktiven Substanzen beschichtet werden. Anschließend werden die im Tauchbad aufgetragenen Substanzen getrocknet und das Blechband zum Monolithen verarbeitet.

Auch diese Tränkverfahren leiden jedoch unter dem Nachteil, daß die aufgebrachten Substanzen nicht einheitlich und nicht in einheitlicher Partikelgröße auf dem strukturierten Träger abgeschieden werden. Die Partikel ballen sich regelmäßig zu vergleichsweise großen Agglomeraten zusammen. Eine derartige Zusammenballung geht mit einem Verlust an aktiver Oberfläche einher, die Aktivität solcher Katalysatoren ist daher regelmäßig unbefriedigend. Weiterhin lösen sich solche Zusammenballungen wie washcoats insbesondere bei der Verarbeitung der mit Aktivmasse versehenen strukturierten Träger zu Monolithen, aber auch während des technischen Einsatzes der Monolithe leicht vom Träger ab, was ebenfalls zu den oben für washcoats beschriebenen Nachteilen führen kann.

Es besteht daher die Aufgabe, ein technisch einfaches Verfahren zur Aufbringung katalytisch aktiver Substanzen auf strukturierte Träger zu finden, das die Nachteile der bekannten Verfahren vermeidet.

Demgemäß wurde ein Tränkverfahren zur Aufbringung katalytisch aktiver Substanzen auf strukturierte Träger oder Monolithe gefunden, das dadurch gekennzeichnet ist, daß man ein Tränkmedium mit einer Oberflächenspannung von höchstens 50 mN/m verwendet. Weiterhin wurden Monolithe gefunden, die mit dem erfindungsgemäßen Tränkverfahren oder aus mit dem erfindungsgemäßen Tränkverfahren hergestellten katalytisch aktiven strukturierten Trägern hergestellt werden und heterogen katalysierte Verfahren, in denen diese strukturierten Träger oder diese Monolithe als Katalysator eingesetzt werden.

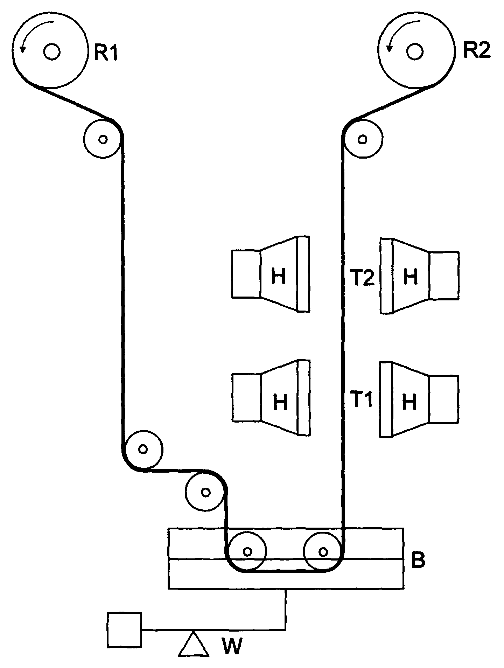

Die Abbildung stellt eine besondere Ausführungsform des erfindungsgemäßen Tränkverfahrens dar.

Das erfindungsgemäße Tränkverfahren ist technisch einfach durchzuführen und führt zu einer überraschend homogenen Abscheidung sehr kleiner und fest haftender Aktivmassenpartikel, ohne daß Agglomerate auftreten. Es können vergleichsweise große Mengen an Aktivmasse einfach abgeschieden werden. Die mit den erfindungsgemäßen Tränkverfahren hergestellten katalytisch aktiven strukturierten Träger können ohne merkliche Ablösung von Aktivmasse zu katalytisch aktiven Monolithen verformt werden, und diese können als Katalysatoren chemischer Reaktionen verwendet werden, ohne daß dabei Aktivmasse in nennenswertem Umfang ausgetragen wird.

Als strukturierte Träger werden im Regelfall im wesentlichen flächige strukturierte Träger verwendet, beispielsweise Gewebe, Gestricke, Gewirke, Filze, Folien, Bleche, Lochbleche oder Streckmetall. Das Verfahren ist jedoch ebenso geeignet, Aktivmasse auf räumliche Strukturen wie Monolithe aufzubringen.

Die für die Träger verwendeten Werkstoffe werden entsprechend den im Laufe der Herstellung, Umarbeitung und vor allem der Verwendung auftretenden Bedingungen gemäß unter metallischen oder keramischen Werkstoffen oder Kunststoffen gewählt. Beispiele für metallische Werkstoffe sind Reinmetalle wie Eisen, Kupfer, Nickel, Silber, Aluminium, und Titan oder Legierungen wie Stähle, etwa Nickel-, Chrom-, und/oder Molybdänstahl, Messing, Phosphorbronze, Monel und/oder Neusilber. Beispiele für keramische Werkstoffe sind Aluminiumoxid, Siliciumdioxid, Zirkondioxid, Cordierit, Steatit und/oder Kohlenstoff. Beispiele für Kunststoffe sind Polyamide, Polyether, Polyvinyle, Polyethylen, Polypropylen, Polytetrafluorethylen, Polyketone, Polyetherketone, Polyethersulfone, Epoxidharze, Alkydharze, Harnstoff- und/oder Melamin-Aldehydharze.

Bevorzugterweise werden metallische strukturierte Träger in Form von Metallgeweben, -gestricken, -gewirken oder -Filzen, Kohlefasergeweben oder -filzen oder Kunststoffgeweben oder -gestricken verwendet.

Wahlweise wird der Träger vor der Aufbringung der Aktivmasse vorbehandelt. Eine Vorbehandlung ist beispielsweise vorteilhaft, wenn die Haftung der Aktivmasse auf dem Träger verbessert werden soll. Beispiele für eine Vorbehandlung sind die Beschichtung des Trägers mit Hattvermittlern oder eine Aufrauhung mit mechanischen (etwa Schleifen, Sandstrahlen) oder thermischen Verfahren wie Erhitzen, in der Regel an Luft, Plasmaätzen oder Glimmen.

In besonders bevorzugter Form werden metallische strukturierte Träger verwendet, die aus Drähten aufgebaut sind, die ihrerseits aus Edelstahl bestehen, der beim Tempern unter Luft und anschließendem Abkühlen eine Aufrauhung der Oberfläche zeigt. Diese Eigenschaft zeigen insbesondere Edelstähle, bei denen sich oberhalb einer spezifischen Entmischungstemperatur ein Legierungebestandteil an der Oberfläche anreichert und in Gegenwart von Sauerstoff durch Oxidation eine festhaftende rauhe oxidische Oberflächenschicht bildet. Ein solcher Legierungsbestandteil kann beispielsweise Aluminium oder Chrom sein, aus denen sich entsprechend eine Oberflächenschicht aus Al₂O₃ oder Cr₂O₃ bildet. Beispiele für solche Stähle sind die mit den Werkstoffnummern (nach der deutschen Norm DIN 17007) 1.4767, 1.4401, 1.4301, 2.4610, 1.4765, 1.4847 und 1.4571. Diese Stähle werden nach bekannten Verfahren (siehe z. B. EP-A 564830) durch Tempern an der Luft bei 400 bis 1100 °C über einen Zeitraum von einer Stunde bis zu 20 Stunden und anschließendes Abkühlenlassen auf Raumtemperatur thermisch aufgerauht.

Die Träger werden mit einem Tränkmedium, das die Aktivmasse, ihre Bestandteile, Vorläufer der Aktivmasse und/oder Vorläufer ihrer Bestandteile enthält, getränkt. Sofern das Tränkmedium Vorläuferverbindungen enthält, werden diese im Zuge der weiteren Verarbeitung zur eigentlichen Aktivmasse umgewandelt. Im Regelfall sind die Aktivmasse, ihre Bestandteile, die Vorläufer der Aktivmasse und/oder die Vorläufer ihrer Bestandteile in in einem Lösungs- und/oder Suspensionsmittel gelöster und/oder suspendiert, es ist jedoch ebenso möglich, das Verfahren ohne Lösungs- und/oder Suspensionsmittel durchzuführen, zum Beispiel mit einem flüssigen Vorläufer der Aktivmasse, der die geforderte Oberflächenspannung aufweist.

Das Tränkmedium hat eine Oberflächenspannung von höchstens 50 mN/m. In bevorzugter Form hat das Tränkmedium eine Oberflächenspannung von höchstens 40 mN/m und in besonders bevorzugter Form von höchstens 35 mN/m. Der Minimalwert der Oberflächenspannung ist im allgemeinen frei wählbar. In bevorzugter Form hat das Tränkmedium jedoch eine Oberflächenspannung von mindestens 10 mN/m und in besonders bevorzugter Form von mindestens 25 mN/m.

Die Oberflächenspannung wird nach der dem Fachmann bekannten OECD-Ringmethode (ISO 304, vgl. Amtsblatt der Europäischen Gemeinschaften Nr. L 383 vom 29.12.1992, Seiten A/47 bis A/53) gemessen.

Ein im Tränkmedium enthaltenes Lösungs- und/oder Suspensionsmittel wird so gewählt, daß die aufzubringende Aktivmasse, ihre Komponenten, ihre und/oder deren Vorläufer darin und/oder damit keine unerwünschten Reaktionen zeigen; weitere Auswahlkriterien sind Preis und einfache Handhabbarkeit. Als Lösungs- und/oder Suspensionsmittel werden die bekannten und technisch gängigen Lösungsmittel verwendet, beispielsweise aromatische oder aliphatische Kohlenwasserstoffe wie Benzol, Toluol, Xylol, Cumol, Pentan, Hexan, Heptan, Kohlenwasserstoffschnitte wie Benzin, Ligroin, Weißöl, Alkohole, Diole, Polyole wie Methanol, Ethanol, die beiden Propanolisomeren, die vier Butanolisomeren, Glykol, Glycerin, Ether wie Diethylether, Di-n-butylether, Methyl-tert.-butylether, Ethyl-tert.-butylether, Methyl-tert.-amylether, Ethyl-tert.-amylether, Diphenylether, Ethylenglykoldimethylether, Diethylenglykoldimethylether, Triethylenglykoldimethylether, oder Wasser. Die verwendeten organischen Lösungs- oder Suspensionsmittel können auch substituiert sein, beispielsweise mit Halogenen, wie Chlorbenzol, oder mit Nitrogruppen, wie Nitrobenzol. Die Lösungs- oder Suspensionsmittel werden einzeln oder im Gemisch verwendet.

In bevorzugter Form wird als Lösungs- und/oder Suspensionsmittel Wasser verwendet.

Im Lösungs- und/oder Suspensionsmittel sind die Aktivmasse, ihre Bestandteile, ihre Vorläufer und/oder deren Bestandteile suspendiert und/oder gelöst. Im einfachsten Fall wird dazu die Aktivmasse oder werden ihre Bestandteile in einem Lösungs- und/oder Suspensionsmittel gelöst und/oder suspendiert. Beispielsweise werden lösliche Aktivmassen oder ihre löslichen Komponenten in einem Lösungsmittel gelöst oder feinpulvrige, unlösliche Aktivmassen oder ihre einzelnen Komponenten in einem Suspensionsmittel suspendiert. Alternativ werden Vorläufer der Aktivmasse oder ihrer Bestandteile in einem Lösungs- und/oder Suspensionsmittel gelöst und/oder suspendiert. Vorläufer werden im Zuge der Weiterverarbeitung in die eigentliche Aktivmasse umgewandelt. Es ist genauso mögliche Teile der Aktivmasse in Form von Vorläufern und andere Teile der Aktivmasse als fertige Aktivmassenkomponenten im Tränkmedium zu verwenden.

Das Tränkmedium enthält darüber hinaus, falls nötig, Hilfsstoffe. Beispielsweise enthält das Tränkmedium sauer oder basisch reagierende Verbindungen oder Puffer, wenn dies zur Stabilisierung oder Löslichkeit der enthaltenden Aktivmasse, mindestens einer ihrer Komponenten, Vorläufer oder deren Vorläufer erforderlich oder vorteilhaft ist.

Bevorzugt werden lösliche Salze der Aktivmassenkomponenten in einem Lösungsmittel vollständig gelöst. Vorteilhafterweise wird eine wäßrige Lösung von Aktivmassenkomponenten verwendet.

Wenn die Aktivmasse aus Metallen besteht, wird in besonders bevorzugter Weise entweder eine wäßrige, salpetersaure Lösung der Nitrate der Metalle oder eine wäßrige, anmoniakalische Lösung von Aminkomplexen der Metalle verwendet. Wenn die Aktivmasse aus amorphen Metalloxiden besteht, wird in bevorzugter Weise ein wäßriges Sol des Oxids, das wahlweise stabilisiert ist, verwendet.

Die Aktivmasse wird gemäß ihrem Einsatzgebiet gewählt; für die einzelnen Einsatzgebiet sind dem Fachmann geeignete Aktivmassen bekannt. Zur Entfernung von Stickoxiden aus Verbrennungsabgasen werden beispielsweise feinpulvriges Titandioxid und Vanadiumoxid enthaltende Aktivmassen verwendet. Für Hydrierreaktionen werden meist Metalle als Aktivmasse verwendet, häufig Metalle aus der 8. Nebengruppe des Periodensystems der Elemente, beispielsweise Eisen, Kobalt, Nickel, Ruthenium, Rhodium, Platin, Palladium und/oder Iridium, die wahlweise mit anderen Metallen als Promotoren dotiert sind, beispielsweise Alkali- und/oder Erdalkalimetallen wie Lithium, Natrium, Kalium, Rubidium, Cäsium, Magnesium, Calcium, Strontium und Barium, Münzmetallen wie Kupfer, Silber und/oder Gold, Zink, Zinn, Bismut, Antimon, Molybdän, Wolfram und/oder mit anderen Promotoren wie Schwefel und/oder Selen.

Wenn als Lösungs- und/oder Suspensionsmittel Wasser verwendet wird, liegt die Oberflächenspannung meist nur wenig unter dem Wert von reinem Wasser (72 mN/m). Sofern die Oberflächenspannung des Tränkmediums oberhalb der erfindungsgemäßen Obergrenze von 50 mN/m liegt, wird dem Tränkmedium mindestens ein die Oberflächenspannung verringernder Zusatz in einer die Oberflächenspannung auf den gewünschten Wert erniedrigenden Menge zugegeben. Als die Oberflächenspannung verringernder Zusatz wird ein oberflächenaktiver Stoff zugegeben. Als oberflächenaktiver Stoff wird in der Regel mindestens ein anionisches oder nichtionisches Tensid zugegeben. Bevorzugterweise werden nichtionische Tenside verwendet und in besonders bevorzugter Weise schaumarme nichtionische Tenside. Die anzuwendende Menge Tensid wird im Einzelfall anhand weniger einfacher Experimente ermittelt. In der Regel genügen Zusätze von 0,01 bis 1 Gew.-% eines Tensids oder Tensidgemisches, bezogen auf die gesamte Tränklösung, vorzugsweise werden 0,05 bis 0,2 Gew.-% eines Tensids verwendet.

Anionische, nichtionische und schaumarme Tenside sind weit verbreitete, handelsübliche und jedem Fachmann bekannte Substanzen. Nichtionische Tenside sind beispielsweise unter dem Markennamen LUTENSOL® und schaumarme nichtionische Tenside unter dem Markennamen PLURAFAC® von BASF Aktiengesellschaft, Ludwigshafen, erhältlich, oder unter anderen Markennamen von zahlreichen anderen Anbietern.

Der strukturierte Träger wird auf bekannte Weise mit dem Tränkmedium getränkt. Dazu wird der strukturierte Träger entweder in das Tränkmedium eingetaucht oder mit ihm durchspült oder besprüht.

Der getränkte Träger wird im Regelfall nach der Tränkung in bekannter Weise getrocknet, um ihn vom Lösungs- und/oder Suspensionsmittel zu befreien. Dazu wird der getränkte Träger im allgemeinen erwärmt, um das Lösungs- und/oder Suspensionsmittel zu verdampfen. Gleichzeitig oder stattdessen kann ein Vakuum angelegt werden. Bei der Tränkung mit wäßrigen Lösungen und/oder Suspensionen genügt im allgemeinen das Erwärmen des Trägers auf mindestens 100 °C bis etwa 120 °C.

Nach der Trocknung oder in einem Schritt mit ihr werden Vorläuferverbindungen, die thermisch zur Aktivmasse zersetzt werden können, in bekannter Weise thermisch zur Aktivmasse zersetzt ("kalziniert"). Dazu wird der getränkte und gegebenenfalls bereits getrocknete Träger auf die dazu ausreichende Temperatur erhitzt. Die dazu geeignete Temperatur wird durch Routineexperimente ermittelt. Im allgemeinen sind Temperaturen im Bereich von 120 °C bis 650 °C ausreichend, meist genügen sogar Temperaturen im Bereich von 120 °C bis 400 °C.

Die Temperatur kann in einem beliebigen Ofen oder mit offenen Heizstrahlern eingestellt werden. Sie ist in jedem Fall so zu wählen, daß der Werkstoff des Trägers bei der angewendeten Temperatur stabil bleibt. Bei Kunststoffen ergibt sich daher automatisch eine Obergrenze der anwendbaren Temperatur, die vom Kunststoff abhängig ist, seiner maximalen Temperaturbeständigkeit entspricht und für die einzelnen Kunststoffe in Datenblättern oder Tabellenwerken angegeben ist.

Vorläuferverbindungen, die nicht thermisch zur Aktivmasse zersetzt werden können, werden statt der thermischen Zersetzung, parallel mit ihr oder an sie anschließend durch geeignete chemische Behandlung zur Aktivmasse umgewandelt. Beispielsweise werden Metallnitrate in der thermischen Behandlung im allgemeinen zu Oxiden zersetzt, die normalerweise nach der thermischen Behandlung durch Behandlung mit einem Reduktionsmittel zum Metall reduziert werden. In einfacher Weise wird das Metalloxid im fertigen Monolithen vor seinem Einsatz als Katalysator im Reaktor mit Wasserstoff oder einem Wasserstoff enthaltenden Gasgemisch zum Metall reduziert.

Während der Trocknung verdampft im wesentlichen das verwendete Lösungs- und/oder Suspensionsmittel, während der Kalzination und/oder der chemischen Nachbehandlung wird aus Vorläufern der Aktivmasse, ihren Komponenten und/oder deren Vorläufern die eigentliche Aktivmasse erzeugt.

Ein im wesentlichen als Trägerbahn flächig strukturierter Träger wird im Regelfall nach der thermischen Behandlung in bekannter Weise zu einem dem Einsatzzweck entsprechend geformten räumlichem Gebilde verformt. Die Verformung erfolgt beispielsweise durch Arbeitschritte wie Zuschneiden, Wellen der Bahn, Anordnen und Fixieren der gewellten Bahnen in Form eines Monolithen mit parallelen oder kreuzweise verlaufenden Kanälen. Die Verformung zum Monolithen wird wahlweise vor der Tränkung, der Trocknung, der thermischen Behandlung oder der chemischen Behandlung durchgeführt.

Das erfindungsgemäße Tränkverfahren wird kontinuierlich oder diskontinuierlich durchgeführt.

Eine kontinuierliche Ausführungsform ist exemplarisch in der Abbildung schematisch dargestellt. Eine Trägerbahn läuft mit bekannter Geschwindigkeit von der Rolle R₁ über ein System von Umlenk- und Spannrollen durch das Bad B, in dem sich das Tränkmedium befindet. Die Konzentration von Aktivmasse, ihren Komponenten, Vorläufern oder deren Komponenten sowie etwaigen Hilfsstoffen im Tränkmedium ist bekannt. Das Bad B steht zur Messung der von der Trägerbahn aufgenommene Menge an Tränkmedium auf der Waage W. Die Trägerbahn durchläuft im Anschluß an die Tränkung nacheinander zwei Heizzonen, in denen Heizstrahler H die Trägerbahn zunächst auf eine Trocknungstemperatur T₁ und anschließend auf eine Kalzinationstemperatur T₂ aufheizen. Nach Verlassen der Heizzonen kühlt die mit Aktivmasse beschichtete Trägerbahn ab und wird auf der Rolle R₂ zur Weiterverarbeitung gesammelt. Aus der bekannten Konzentration der Aktivmasse oder ihrer Vorläufer im Tränkmediun und der Gewichtsmessung mit der Waage W kann die auf der Trägerbahn abgeschiedene Aktivmassenmenge berechnet werden. Mit den Konzentrationen im Tränkmedium und der Verweildauer der Trägerbahn im Tränkmedium, die durch die Geschwindigkeit der Trägerbahn und/oder die Größe des Behälters mit Tränkmedium beeinflußt wird, wird die abgeschiedene Aktivmassenmenge geregelt. Zur vollkontinuierlichen Durchführung wird das Tränkmedium auf Basis der Messung der von der Trägerbahn aufgenommenen Menge kontinuierlich in den Tränkbehälter nachgefüllt.

Die erfindungsgemäßen Monolithe werden wie oben beschrieben aus dem mit dem erfindungsgemäßen Tränkverfahren mit Aktivmasse beschichteten strukturierten Trägern hergestellt. Wahlweise werden die Monolithe aus den unbeschichteten Trägerbahnen oder, insbesondere keramische Monolithe, mit anderen gängigen Verfahren, beispielsweise Guß oder Extrusion, hergestellt und erst anschließend mit dem erfindungsgemäßen Tränkverfahren mit Aktivmasse beschichtet. Die Monolithe weisen üblicherweise zur Hauptströmungsrichtung bei Verwendung parallele oder zu ihr geneigte offene Kanäle auf. Die allgemeinen Ausführungsformen von Monolithen, ihre Strukturen, Verfahren zu ihrer Herstellung und ihre Anordnung zu Katalysator- oder Kolonnenpackungen sind dem Fachmann bekannt.

Die erfindungsgemäßen heterogen katalysierten Verfahren zeichnen sich dadurch aus, daß mindestens eine mit dem erfindungsgemäßen Tränkverfahren mit Aktivmasse beschichtete strukturierte Trägerbahn oder mindestens ein erfindungsgemäßer Monolith im Verfahren als Katalysator verwendet wird. Beispiele für erfindungsgemäße heterogen katalysierte Verfahren sind Hydrierungen organischer Verbindungen oder Reaktivdestillationen, in denen ein erfindungsgemäßer Monolith oder eine Packung aus erfindungemäßen Monolithen verwendet wird. Im allgemeinen kann eine mit dem erfindungsgemäßen Tränkverfahren mit Aktivmasse beschichtete strukturierte Trägerbahn oder ein erfindungsgemäßer Monolith in jedem Verfahren eingesetzt werden, in dem katalytisch aktive strukturierte Trägerbahnen oder Monolithe verwendet werden. Einzelne Verfahren sind beispielsweise die Hydrierung von Mehrfachbindungen in orgnaischen Molekülen, wie die Hydrierung von 2-Butin-1,4-diol zu 2-Buten-1,4-diol und/oder 1,4-Butandiol, die Hydrierung von Vinyloxiran zu Butylenoxid, von Dihydrofuran zu Tetrahydrofuran, von reaktiven Diolefinen und Olefinen in C5+-Strömen wie Pyrolysebenzin, Reformatbenzin oder Koksofenbenzol, von Vinylacetylen in C4-Strömen zu 1,3-Butadien und/oder Butenen, von Butadien in C4-Strömen zu Butenen, von Methylacetylen und/oder Propadien in C3-Strömen zu Propen. Diese Verfahren können sowohl in einem gepackten Reaktor als auch unter gleichzeitiger Stofftrennung in einer gepackten Reaktivdestillationskolonne ("katalytische Destillation") durchgeführt werden.

### Beispiele

### Beispiel 1

Ein 20 cm breites Metallgewebeband in Leinenbindung aus dein Werkstoff Nr. 1.4301 mit einer Maschenweite von 0,18 mm und einem Drahtdurchmesser von 0,105 mm wurde 3 Stunden lang bei 800 °C in einem Muffelofen getempert. Nach dem Abkühlen auf Raumtemperatur wurde das derart vorbehandelte Gewebe auf die Rolle R₁ der in der Abbildung schematisch dargestellten Tränkapparatur gewickelt und mit der Rolle R₂ durch zwei Drähte verbunden.

In das Badgefäß B wurde eine aus Palladiumnitrat, Silbernitrat und destilliertem Wasser hergestellte wäßrige Tränklösung gefüllt, die 0,144 Gew.-% Palladium und 0,0365 Gew.-% Silber enthielt. Zur Erniedrigung der Oberflächenspannung auf 29,4 mN/m wurden der Tränklösung 0,1 Gew.-% des schaumarmen nichtionischen Tensids PLURAFAC® LF 131 (Bezugsquelle: BASF Aktiengesellschaft, Ludwigshafen) zugesetzt. Mittels eines mit der Rolle R₂ verbundenen Motors wurde das Gewebe mit einer Geschwindigkeit von 1,6 Meter pro Minute durch das Bad mit der Tränklösung gezogen und auf der Rolle R₂ aufgewickelt. Dabei wurden vom Gewebe pro Quadratmeter 0,1197 g Palladium und 0,0303 g Silber aufgenommen.

Mittels zweier Heizstrahler wurde in der Trockenzone T₁ die Temperatur so eingestellt, daß das Gewebeband beim Verlassen der Zone T₁ eine Temperatur von 110 °C aufwies.

Anschließend wurde das getränkte und getrocknete Gewebe für eine Stunde bei 300 °C an der Luft kalziniert.

Das Gewebeband wurde danach mittels einer Zahnradwalze teilweise gewellt, geschnitten und jeweils ein gewellter und ein ungewellter Streiten aufeinander gelegt und zusammengerollt. Der so entstandene zylinderförmige Monolith von 200 mm Höhe und 25,5 mm durchmesser wurde außen durch Punktschweißen fixiert. Beim Verformen fiel kein Abrieb oder Metallstaub an.

Der so erzeugte Monolith erhielt die Bezeichnung "Monolith A".

### Vergleichsbeispiel 1

Wie in Beispiel 1 wurde ein 20 cm breites Metallgewebeband in Leinenbindung aus dem Werkstoff Nr. 1.4301 mit einer Maschenweite von 0,18 mm und einem Drahtdurchmesser von 0,105 mm 3 Stunden lang bei 800 °C in einem Muffelofen getempert. Anschließend wurde dieses Metallgewebeband analog dem Verfahren von Beispiel 1 aus EP-A 412415 in einer UHV-Bedampfungsanlage (Rollcoater) die mit zwei Sputterelektroden ausgerüstet war, im Vakuum in einem Durchgang nacheinander zuerst mit 0,138 g/m² Palladium und anschließend mit 0,0195 g/m² Silber bedampft. Das bedampfte Gewebe wurde anschließend durch Erhitzen über 3 Stunden an der Luft auf 300 °C kalziniert und anschließend wie in Beispiel 1 zu einem Monolithen verformt. Der Monolith erhielt die Bezeichnung "Monolith VA".

### Beispiel 2

Analog zur Vorgehensweise von Beispiel 1 wurde ein bei 900 °C getempertes Gewebeband aus dem Werkstoff 1.4767 mit einer wäßrigen Palladium- und Zinknitrat enthaltenden Tränklösung behandelt, deren Oberflächenspannung durch Zusatz von 0,1 Gew.-% des nichtionischen Tensids LUTENSOL® LF 131 (Bezugsquelle: BASF Aktiengesellschaft, Ludwigshafen) auf 29,5 mN/m erniedrigt war. Die Lösung enthielt 1,734 Gew.-% Palladium und 0,266 Gew.-% Zink, vom Gewebeband wurden pro Quadratmeter 1,603 g Palladium und 0,246 g Zink aufgenommen. Zur Kalzination wurde im Unterschied zu Beispiel 1 über 2 Stunden auf 250 °C und über zwei weitere Stunden auf 350 °C erhitzt. Das Gewebeband wurde nach Tränkung, Trocknung und Kalzination zu einem Monolithen verformt.

Der hergestellte Monolith erhielt die Bezeichnung "Monolith B".

Im rasterelektronenmikroskopischen Bild sind keine Agglomerate auf dem Träger zu erkennen.

### Vergleichsbeispiel 2

Beispiel 2 wurde wiederholt, wobei der Tränkläsung jedoch kein Tensid zugesetzt wurde. Die Oberflächenspannung der Tränklösung betrug 69,6 mN/m. Vom Gewebeband wurden pro Quadratmeter 1,674 g Palladium und 0,257 g Zink aufgenommen

Der hergestellte Monolith erhielt die Bezeichnung "Monolith VB".

Im rasterelektronenmikroskopischen Bild sind auf dem Träger Agglomerate der Aktivmasse zu erkennen, vor allem an den Kreuzungspunkten der Metallfäden.

### Beispiel 3

Ein 15 m langer und 20 cm breiter Metallgewebestreifen in Leinenbindung aus dem Werkstoff Nr. 1.4767 mit einer Maschenweite von 0,18 mm und einem Drahtdurchmesser von 0,112 mm wurde 5 Stunden lang bei 900 °C in einem Muffelofen getempert. Nach dem Abkühlen auf Raumtemperatur wurde das derart vorbehandelte Gewebe auf die Rolle R₁ der in der Abbildung schematisch dargestellten Tränkapparatur gewickelt und mit der Rolle R₂ durch zwei Drähte verbunden.

In das Badgefäß B wurde eine aus 101,83 g Ni(NO₃)₂ · 6 H₂O und 898,17 g destilliertem Wasser hergestellte wäßrige Nickelnitratlösung gefüllt, deren Oberflächenspanung durch Zusatz von 0,05 Gew.-% LUTENSOL LF 131 (Bezugsquelle: BASF Aktiengesellschaft, Ludwigshafen) auf 30 mN/m erniedrigt worden war. Mittels eines mit der Rolle R₂ verbundenen Motors wurde das Gewebe mit einer Geschwindigkeit von 1,5 Meter pro Minute durch das Bad mit der Tränklösung gezogen und auf der Rolle R₂ aufgewickelt. Dabei wurden 287,4 g der Nickelnitratlösung vom Gewebe aufgenommen. Dieses entspricht 1,92 g Nickel pro Quadratmeter Gewebe.

Mittels zweier Heizstrahler wurde in der Trockenzone T₁ die Temperatur so eingestellt, daß das Gewebeband beim Verlassen der Zone T₁ eine Temperatur von 110 °C aufwies. In der Zone T₂ wurde durch zwei Heizstrahler die Temperatur so eingestellt, daß das Gewebeband beim Verlassen der Zone eine Temperatur von 350 °C aufwies.

Das Gewebeband wurde danach mittels einer Zahnradwalze teilweise gewellt, geschnitten und jeweils ein gewellter und ein ungewellter Streifen aufeinander gelegt und zusammengerollt. Der so entstandene zylinderförmige Monolith wurde außen durch Punktschweißen geschlossen. Beim Verformen fiel kein Abrieb oder Nickelstaub an.

### Beispiel 4

Die Monolithe A, VA, B und VB wurden wie folgt in der diskontinuierlichen selektiven Hydrierung von Hydro-Dehydrolinalool zu Hydrolinalool verwendet:

Jeder Monolith wurde in eine Hydrierapparatur mit Flüssigkeitsrückführung und Kreisgasfahrweise eingebaut und durch einstündiges Behandeln mit Wasserstoff bei 80 °C vorreduziert.

Anschließend wurde Hydro-Dehydrolinalool zugegeben und in Sumpffahrweise mit Produktrückführung und Kreisgasfahrweise hydriert. Die Querschnittsbelastung für Flüssigkeit und Gas betrug 200 m³/m² · h. Die gemessene Raumzeitausbeute in kg Produkt pro Liter des Katalysatorvolumens und Stunde ist ein Maß für die Aktivität des Katalysators.

Die Ergebnisse der Hydrierversuche sind in der nachfolgenden Tabelle zusammengefaßt.

**Tabelle**

| Monolith | Aktivmasse | | | | Tensidzusatz | Raum-Zeit-Ausbeute |
|---|---|---|---|---|---|---|
| | | [g/m²] | | [g/m²] | [Gew.-%] | [kg/l_{Kat.}·h] |
| A | Pd | 0,1197 | Ag | 0,0303 | 0,1 | 1,30 |
| VA | Pd | 0,138 | Ag | 0,0195 | - | 1,05 |
| B | Pd | 1,603 | Zn | 0,246 | 0,1 | 2,50 |
| VB | Pd | 1,674 | Zn | 0,257 | 0 | 1,43 |

Die Ergebnisse der Hydrierversuche zeigen, daß die mit dem erfindungsgemäßen Tränkverfahren hergestellten Monolithe deutlich bessere Eigenschaften zeigen und insbesondere deutlich aktiver sind als jeweils vergleichbare Monolithe, die mittels Aufdampftechnik oder mittels konventioneller Tränktechnik hergestellt wurden.

Weiterhin zeigen die Beispiele, daß das erfindungsgemäße Tränkverfahren der Bildung von Agglomeraten entgegenwirkt.

## Patentansprüche

1. Tränkverfahren zur Aufbringung von Aktivmasse auf strukturierte Träger oder Monolithe, dadurch gekennzeichnet, daß man ein Tränkmedium mit einer Oberflächenspannung von höchstens 50 mN/m verwendet.

2. Tränkverfahren nach Anspruch 1, dadurch gekennzeichnet, daß man ein Tränkmedium mit einer Oberflächenspannung von höchstens 35 mN/m verwendet.

3. Tränkverfahren nach Anspruch 1, dadurch gekennzeichnet, daß man die Oberflächenspannung des Tränkmediums durch Zusatz eines oberflächenaktiven Stoffs auf höchstens 50 mN/m einstellt.

4. Tränkverfahren nach Anspruch 3, dadurch gekennzeichnet, daß das Tränkmedium eine mindestens ein Metalnitrat und mindestens ein Tensid enthaltende wäßrige Lösung ist.

5. Strukturierte Träger mit katalytischer Aktivität, hergestellt unter Anwendung des in Anspruch 1 beschriebenen Tränkverfahrens.

6. Monolithe mit katalytischer Aktivität, hergestellt unter Anwendung des in Anspruch 1 beschriebenen Tränkverfahrens.

7. Monolithe mit katalytischer Aktivität, hergestellt aus den in Anspruch 5 beschriebenen strukturierten Trägern.

8. Heterogen katalysierte Verfahren, dadurch gekennzeichnet, daß man im Verfahren die in Anspruch 6 oder Anspruch 7 beschriebenen Monolithe oder die in Anspruch 5 beschriebenen strukturierten Träger als Katalysator und/oder katalytisch aktive Kolonnenpackung einsetzt.

9. Verwendung der in Anspruch 6 oder Anspruch 7 beschriebenen Monolithe oder der in Anspruch 5 beschriebenen strukturierten Träger als Katalysator und/oder katalytisch aktive Kolonnenpackung.
